# FASCICULE DE BREVET EUROPEEN

(11) **EP 1 312 406 B1**
(45) Date de publication et mention de la délivrance du brevet: **08.08.2007**
(21) Numéro de dépôt: 02292754.5
(22) Date de dépôt: 05.11.2002
(51) Int. Cl.: B01D 53/047, B01D 53/04, C01B 3/56

(54) **Procédé de purification de gaz de synthèse**
Verfahren zur Reinigung von Synthesegas
Process for purifying synthesis gas

(30) Priorité: 14.11.2001 FR 0114710
(43) Date de publication de la demande: 21.05.2003
(73) Titulaire: CECA S.A., 92800 Puteaux (FR)
(72) Inventeur: Bancon, Stéphane, 64150 Mourenx (FR); Le Bec, Remi, 64170 Labastide Cezeracq (FR)
(74) Mandataire: Treuil, Claude

(56) Documents cités:
- EP-A- 0 718 024
- EP-A- 1 120 149
- FR-A- 2 775 617

## Description

### Domaine technique

La présente invention concerne un procédé de purification de gaz de synthèse de type H₂/CO ou H₂/N₂, qui consiste à éliminer CO₂ et éventuellement d'autres impuretés gazeuses (eau, méthane, éthane, NOx, etc.) par adsorption sur au moins un lit d'adsorbant(s) comprenant au moins un adsorbant à base de zéolite de type NaLSX.

Les impuretés sont adsorbées par passage du flux gazeux à purifier sur le(s) lit(s) d'adsorbant(s) comprenant au moins un adsorbant à base de zéolite de type NaLSX, puis désorbées lors d'une étape de régénération qui peut se faire par élévation de la température (TSA) et/ou par diminution de la pression (PSA ou VSA)

Ce procédé peut avantageusement être mis en oeuvre avant passage du gaz de synthèse ainsi purifié dans un procédé cryogénique pour séparer l'hydrogène du CO ou de l'azote.

### Technique antérieure

On utilise l'expression générique gaz de synthèse (syngas en anglais) pour les gaz majoritairement constitués d'hydrogène et de CO (environ 25 % en volume de CO) qui sont utilisés comme produits réactionnels dans certaines synthèses de chimie de base (méthanol, acide acétique, phosgène, acryliques, ....) Ces gaz de synthèse sont généralement obtenus par réaction d'oxydation partielle ou de reformage à l'eau ou au CO₂ de charge hydrocarbonée (allant du gaz naturel jusqu'à des hydrocarbures lourds) qui donne un mélange H₂ + CO + CO₂ + H₂O + autres impuretés, les proportions respectives de H₂, CO, CO₂, H₂O dépendant des conditions de synthèse.

On entend également par gaz de synthèse au sens de la présente invention les mélanges H₂/N₂ notamment utilisés pour la synthèse de l'ammoniac. Ces mélanges sont généralement produits par oxydation partielle de l'air ou reformage d'une charge hydrocarbonée. Cette étape peut être complétée de la réaction appelée "CO-shift" : CO + H₂O→ CO₂ + H₂ qui transforme le CO en CO₂, et fournit ainsi plus d'hydrogène.

La purification des gaz de synthèse est souvent nécessaire, par exemple lorsqu'on souhaite séparer soit CO et H₂, soit N₂ et H₂, ce qui se fait soit par cryogénie, soit par lavage au méthane liquéfié : il faut absolument éliminer toutes les impuretés qui pourraient cristalliser et donc boucher les échangeurs du procédé cryogénique.

Dans les cas où la quantité de CO₂ contenue dans le flux de gaz de synthèse à purifier est supérieure à plusieurs milliers de ppm, on procède tout d'abord à un lavage aux amines (type MEA, MDEA) pour éliminer la majeure partie du CO₂. Le gaz est ensuite envoyé sur une colonne d'adsorbant(s) pour éliminer les traces de CO₂ résiduel (quelques dizaines de ppm) non éliminé par le lavage aux amines et éventuellement la ou les autres impuretés présentes dans le gaz de synthèse, par exemple l'eau souvent présente en même temps que le CO₂ (suite au lavage par les amines, le gaz est saturé en eau)

Les procédés de purification de gaz de synthèse par adsorption utilisent de manière classique pour l'adsorption du CO₂ des adsorbants à base de zéolite de type 4A (Na A) ou 13X (Na X avec rapport atomique Si/Al ≥ 1,25 ± 0,05) ; cependant ces adsorbants présentent l'inconvénient de permettre des temps de cycles d'adsorption/désorption relativement courts ce qui nécessite des régénérations assez fréquentes de la matière adsorbante et augmente le coût de fonctionnement de l'unité industrielle d'adsorption.

L'utilisation des zéolites de type LSX (Low Silica X ou zéolite X à faible taux de silice i-e de rapport atomique Si/Al ≈1), indifféremment échangées avec des cations des groupes 1A, 2A, 3A, 3B et/ou lanthanides, etc. a été décrite dans US 5.531.808 et son correspondant EP 718.024 pour la décarbonatation de gaz moins polaires que le CO₂, et notamment de l'air. Selon US 5.531.808 et EP 718.024, ce procédé ne fonctionne efficacement qu'à des pressions d'adsorption en général comprises entre 0,02 et 2 MPa.

### Exposé de l'invention

Le procédé selon l'invention met en oeuvre un lit d'adsorbant(s) comprenant un adsorbant à base de zéolite de type NaLSX, de Si/Al allant de 0,9 à 1,1 de préférence allant de 1 à 1,05, qui s'avère particulièrement avantageux, comparativement aux lits d'adsorbants à base de zéolites 4A ou NaX, puisqu'il permet des temps de cycles plus longs, donc des régénérations moins fréquentes.

Au sens de l'invention par adsorbant à base de NaLSX, on entend les adsorbants dont la matière active zéolitique est essentiellement constituée de zéolite NaLSX mais aussi les mélanges de zéolite NaLSX et de zéolite NaX tels que décrits en détail dans WO 01/24923. au nom de la demanderesse.

L'adsorbant à base de zéolite NaLSX du procédé selon l'invention peut être mis en oeuvre sous forme pulvérulente (forme sous laquelle la zéolite NaLSX est en général synthétisée) soit, de manière préférentielle, sous forme de grains, de billes ou de filés qui présentent l'avantage de faciliter les manipulations des adsorbants, par exemple lors des étapes de chargement et de déchargement des colonnes d'adsorption, et surtout de limiter les pertes de charge lors du passage des flux gazeux pendant leur utilisation dans le procédé.

Pour l'agglomération, on procède dans un premier temps au mélange de ladite zéolite LSX proprement dite avec un liant d'agglomération, en général lui-même sous forme de poudre, en présence d'eau puis on transforme le mélange en un agglomérat, par exemple par extrusion ou formation billes, et on chauffe le mélange zéolite/liant mis en forme à une température de 400-700°C environ pour convertir l'agglomérat « vert » en un agglomérat qui est résistant à l'écrasement. Les liants utilisés pour agglomérer les zéolites incluent les argiles (particulièrement préférées par la demanderesse), les silices, les alumines, les oxydes métalliques et leurs mélanges.

Il est possible de préparer des agglomérats contenant de 5 à 10 % en poids de liant résiduel. Un procédé d'obtention de ces agglomérats à faible taux de liant consiste à convertir le liant des agglomérats décrits ci-dessus en phase zéolitique. Pour cela, on commence par agglomérer une poudre de zéolite LSX avec un liant zéolitisable (par exemple kaolin ou métakaolin), puis on zéolitise par macération alcaline par exemple selon le procédé décrit dans EP 932.581. On peut ainsi aisément obtenir selon l'invention des granulés titrant au moins 90% de zéolite remarquablement performants.

En outre, les zéolites peuvent être agglomérées avec des matériaux tels que silice-alumine, silice-magnésie, silice-zircone, silice-thorine, silice-oxyde de béryllium et silice-dioxyde de titane, ainsi qu'avec des compositions ternaires telles que silice-alumine-thorine, silice-alumine-zircone et des argiles présents comme liants.

Les proportions relatives des matériaux constitutifs du liant et des zéolites peuvent varier largement. Le liant d'agglomération représente en général de 5 à 30 parties en poids pour 100 parties d'aggloméré. Les agglomérats ont avantageusement un diamètre moyen d'environ 0,2 à environ 5 mm.

Le procédé de purification de gaz de synthèse, c'est-à-dire à base d'hydrogène et contenant au moins de l'azote et/ou au moins du CO est tel que chaque lit d'adsorbant est soumis à la succession de cycles de traitement comprenant les étapes consistant à :
a) faire passer un mélange gazeux à base d'hydrogène, de monoxyde de carbone et/ou d'azote et renfermant à titre d'impuretés au moins le dioxyde de carbone et une ou plusieurs autres impuretés, dans une zone d'adsorption comprenant :
   - au moins un adsorbant susceptible d'adsorber sélectivement le dioxyde de carbone, qui comprend au moins une zéolite X du type faujasite de rapport Si/Al voisin de 1, de préférence compris entre 0,9 et 1,1, et avantageusement allant de 1 à 1,05, dont au moins 70% et de préférence au moins 90 % des sites échangeables sont occupés par des ions sodium ; le reste des sites cationiques étant occupés par des cations de type K, Ca, ou par d'autres cations mono- et/ou polyvalents (magnésium, strontium, baryum, lanthanides ou terres-rares, etc.)
   - un ou plusieurs éventuels autres adsorbants, susceptibles d'adsorber de la ou des éventuelles autres impuretés que le CO₂, telles que l'eau, les hydrocarbures (légers à lourds), les oxydes d'azote N₂O, NO et NO₂ (communément dénommés NOx), les adsorbants décrits précédemment étant soit disposés en couches successives et/ou se présentant sous forme de mélange intime,
b) désorber le dioxyde de carbone et l(es) éventuelle(s) autre(s) impureté(s) adsorbés sur le ou les adsorbants décrits sous a) par instauration d'une augmentation de température et/ou d'une diminution de pression, cette étape pouvant être complétée par une phase de purge consistant à recycler une partie du gaz purifié,
c) remonter en pression ladite zone d'adsorption par introduction d'un courant de gaz purifié par la sortie de la zone d'adsorption et/ou refroidir la zone d'adsorption par balayage de gaz froid purifié.

Ainsi, chaque lit d'adsorbant est soumis à un cycle de traitement comprenant une première phase de production de gaz de synthèse purifié, une seconde phase de régénération des adsorbants pouvant combiner décompression, chauffe, recompression et refroidissement.

Le procédé de purification selon l'invention est également bien adapté pour la purification de gaz de synthèse contenant également d'autres impuretés telles que l'eau, le méthane, l'éthane et d'autres composés hydrocarbonés. Les inventeurs ont en outre constaté que la présence des autres composés contenus dans le gaz de synthèse, notamment le CO, rend plus difficile l'adsorption de dioxyde de carbone.

Le procédé selon l'invention est particulièrement adapté lorsque les concentrations en CO₂ du mélange gazeux à purifier ne sont pas trop élevées , c'est-à-dire
* en général inférieures ou égales à 1.000 ppm pour des pression d'adsorption de l'ordre de 3 MPa (ce qui, exprimé en pression partielle de CO₂, correspond à des valeurs inférieures ou égales à 3 Pa),
* de préférence inférieure ou égales à 100 ppm pour des pression d'adsorption de l'ordre de 3 MPa (ce qui, exprimé en pression partielle de CO₂, correspond à des valeurs inférieures ou égales à 0,3 Pa)

Lorsque le gaz de synthèse à purifier contient aussi de l'eau, on peut utiliser l'adsorbant à base de NaLSX seul mais on peut également ajouter dans la colonne d'adsorption à l'adsorbant à base de NaLSX sélectif du CO₂ un ou plusieurs adsorbants susceptibles d'adsorber sélectivement l'eau tel que par exemple de l'alumine, du gel de silice, ou une zéolite de type A ou de type X (de rapport atomique Si/Al ≥ 1,25 ± 0,05) ; ce ou ces adsorbants sélectifs de l'eau peuvent être utilisés en mélange intime avec l'adsorbant à base de NaLSX sélectif de CO₂ comme décrit dans EP 862.936 ou EP 904.825 ou de manière préférentielle se trouvent sous forme de couche distincte placée dans la colonne d'adsorption en amont de l'adsorbant sélectif du CO₂ comme décrit dans EP 862.938.

Lorsque le gaz de synthèse à purifier contient également des hydrocarbures lourds comme impuretés, tels que butanes, pentanes, etc., on peut utiliser l'adsorbant à base de NaLSX seul mais on préfère, dans la colonne d'adsorption, ajouter à l'adsorbant à base de NaLSX sélectif du CO₂ un ou plusieurs adsorbants susceptibles d'adsorber sélectivement les hydrocarbures lourds tel que par exemple des alumines, gels de silice ou charbons actifs, ou des zéolites ; ce ou ces adsorbants sélectifs des hydrocarbures lourds peuvent être utilisés en mélange intime avec l'adsorbant à base de NaLSX sélectif de CO₂ ou de manière préférentielle se trouvent sous forme d'une couche distincte placée dans la colonne d'adsorption en amont de l'adsorbant sélectif du CO₂.

Lorsque le gaz de synthèse à purifier contient également des hydrocarbures légers comme impuretés, telles que l'éthane, l'éthylène, le propylène, etc., et/ou des NOx, on peut utiliser l'adsorbant à base de NaLSX seul mais on préfère, dans la colonne d'adsorption, ajouter à l'adsorbant à base de NaLSX sélectif du CO₂ un ou plusieurs adsorbants susceptibles d'adsorber sélectivement les hydrocarbures légers et/ou les NOx tel que par exemple des alumines, gels de silice ou charbons actifs, ou des zéolites ; ce ou ces adsorbants sélectifs des hydrocarbures peuvent être utilisés en mélange intime avec l'adsorbant à base de NaLSX sélectif de CO₂ ou de manière préférentielle se trouvent sous forme d'une ou plusieurs couches distinctes placées dans la colonne d'adsorption en aval de l'adsorbant sélectif du CO₂.

Lorsque le gaz de synthèse à purifier contient de l'eau et/ou des hydrocarbures lourds ainsi que des NOx et/ou des hydrocarbures légers en tant qu'impuretés, on peut utiliser l'adsorbant à base de NaLSX seul mais on préfère, dans la colonne d'adsorption, ajouter à l'adsorbant à base de NaLSX sélectif du CO₂ le ou les adsorbants sélectifs de l'eau et/ou des hydrocarbures lourds soit sous forme d'un mélange intime comme décrit par exemple dans EP 1.101.521 soit de manière préférentielle en plaçant sous forme de couche distincte :
en amont de l'adsorbant sélectif du CO₂ un adsorbant ou plusieurs adsorbants susceptibles d'adsorber sélectivement l'eau et/ou des hydrocarbures lourds,
et en aval de l'adsorbant sélectif du CO₂ un adsorbant ou plusieurs adsorbants susceptibles d'adsorber sélectivement les hydrocarbures légers et/ou les NOx.

Par ailleurs, le procédé selon l'invention peut être combiné à tout autre procédé permettant d'éliminer d'autres impuretés non citées précédemment et qui seraient également présentes dans le gaz de synthèse : par exemple, si des traces de mercure sont contenues dans le gaz de synthèse (issu de la charge hydrocarbonée), celles-ci pourront être éliminées sur une couche de zéolite échangée à l'argent placée dans la zone d'adsorption de la présente invention, et peuvent être désorbées lors de la régénération thermique. Il est en effet souvent nécessaire de piéger les vapeurs de mercure avant l'introduction du gaz dans une unité cryogénique afin d'éviter toute corrosion des échangeurs. Ces traces de mercure peuvent également être éliminées en amont ou en aval de l'unité décrite dans cette invention, sur des charbons actifs imprégnés à l'iode ou au soufre.

La pureté du gaz de synthèse obtenu à l'issue du procédé de purification selon l'invention est très élevée : on peut obtenir des concentrations résiduelles en impuretés inférieures à 0,1 vpm en CO₂ et inférieures à 0,1 vpm en eau.

En règle générale, dans le cadre du procédé de l'invention, la zone d'adsorption est maintenue à une pression comprise entre 0,5 et 7 MPa, lors de la mise en contact du mélange gazeux à purifier avec le ou les adsorbants décrits précédemment. Cependant une pression supérieure ne nuirait pas à la conduite de la purification. Toutefois, dans un souci d'économie d'énergie et en raison du coût élevé d'installations résistant à la pression, on évitera en général les pressions au-delà de 7 MPa. Des pressions inférieures à 0,5 MPa ne sont habituellement pas mises en oeuvre pour la production industrielle de gaz de synthèse pour des raisons pratiques; en effet les procédés mis en oeuvre en amont du procédé selon l'invention qui correspondent aux réactions pour faire du gaz de synthèse se font à des pressions généralement d'environ 2-3 MPa. De préférence, la pression régnant dans la zone d'adsorption sera maintenue à une valeur inférieure ou égale à 5 MPa, et avantageusement inférieure ou égale à 3 MPa. De même, la zone d'adsorption est maintenue, de préférence supérieure ou égale à 0,5 MPa, et avantageusement supérieure ou égale à 2 MPa.

La température du flux gazeux entrant dans la zone d'adsorption n'est pas déterminante et est généralement maintenue constante pendant la phase d'adsorption. D'ordinaire cette température est comprise entre 0 et 80°C, préférablement entre 20 et 50°C. La température de désorption peut être comprise entre 100 et 300°C, préférentiellement entre 150 et 250°C.

La présente invention s'applique à tout type de procédé PSA, VSA et/ou TSA pour la purification de gaz de synthèse et ainsi toute modification de paramètre tel que niveau de pression, taux de purge, etc, visant à améliorer les performances du procédé peut avantageusement se combiner avec les caractéristiques essentielles du procédé selon l'invention exposées précédemment.

La présente invention peut s'appliquer soit lors de la conception d'une nouvelle installation pour la purification de gaz de synthèse, ce qui permet, par rapport à une installation industrielle de l'art antérieur fonctionnant avec la même productivité, une diminution de la taille des colonnes (donc une diminution de l'investissement), soit dans le cas du remplacement des adsorbants des colonnes d'une installation industrielle existante par les adsorbants de la présente invention, une amélioration notable de la productivité (ou une diminution du nombre de régénérations nécessaires)

### Exemples

Dans les tous les exemples, on a fait passer un courant gazeux de composition connue au travers d'une colonne remplie d'adsorbant(s), jusqu'à la percée en CO₂, puis on a procédé à la désorption, et ce, pendant plusieurs cycles.

La colonne d'adsorbant utilisée a les dimensions suivantes :
- diamètre = 2,7 cm - hauteur = 190 cm

On utilise un gaz de synthèse de composition suivante :
- H₂ = 80% vol (q.s.p.)
- CO ou N₂ = 20% en volume
- CO₂ = 76 vpm
- H₂O = 2400 vpm

Des analyseurs de CO₂ et H₂O sont placés en sortie de colonne afin de suivre l'évolution de leur concentration au cours des cycles, et notamment détecter la percée en CO₂ qui intervient normalement avant celle de l'eau.

On enchaîne les étapes suivantes :
1/ étape d'adsorption
   P = 2,3 MPa
   T = 38°C
   débit total = 6,7 Nm³/h
   La première adsorption est effectuée sur une durée arbitrairement choisie (2 à 5h) sans atteindre la percée de CO₂, ceci afin de limiter la progression du front d'eau dans la colonne. Ensuite pour les cycles suivants, l'adsorption est poursuivie jusqu'à la percée de CO₂ (jusqu'à 7 vpm) puis on bascule automatiquement en désorption.
2/ étape de désorption (opérée à contre-courant)
   P = 2,3 MPa
   sous hydrogène pur
   débit H₂ = 1,6 Nm³/h
   On procède à une montée progressive en température jusqu'à 190°C pendant 2 heures, puis la température est maintenue à 190 °C pendant 2 heures, puis la colonne est refroidie sous H₂ au même débit (1,6 Nm³/h) et à contre-courant pendant 2 heures.
3/ On complète cette dernière étape par un refroidissement extérieur sans balayage d'hydrogène pour arriver à T~45°C avant de reprendre une étape d'adsorption.

On enchaîne plusieurs cycles, jusqu'à obtenir une stabilisation du temps de percée en CO₂.

Les échantillons testés sont des billes de granulométrie comprise entre 1,6 et 2,5 mm constituées de 80 % en poids de zéolite (matière active) et de 20% de liant d'agglomération à base d'argile.

### Exemple 1 (comparatif)

Le gaz à traiter a la composition suivante :
- H₂ = 80% en volume
- N₂ = 20% en volume
- CO₂ = 76 vpm
- H₂O = 2400 vpm

La zéolite testée est une NaX (taux d'échange en Na ≈100 % ; Si/Al =1,23.)

Le temps de percée en CO₂ qui s'établit au bout de plusieurs cycles est de 7,7h.

### Exemple 2 (comparatif)

Le gaz à traiter a la composition suivante :
- H₂ = 80% en volume
- CO = 20% en volume
- CO₂ = 76 vpm
- H₂O = 2400 vpm

La zéolite testée est la même NaX agglomérée que celle de l'exemple 1.

Le temps de percée en CO₂ qui s'établit au bout de plusieurs cycles est de 4,6h.

Cet exemple illustre bien l'influence du type de gaz sur la performance de la zéolite ; en l'occurrence la présence de CO perturbe beaucoup plus que l'azote la capacité de la zéolite vis-à-vis du CO₂.

### Exemple 3 (comparatif)

Le gaz à traiter a la même composition que l'exemple 2.

La zéolite testée est une zéolite de type 4A (taux d'échange en Na≈100%)

Le temps de percée en CO₂ qui s'établit au bout de plusieurs cycles est de 2,7h.

### Exemple 4 (selon l'invention)

Le gaz à traiter a la même composition que l'exemple 2.

La zéolite testée est une NaLSX (taux d'échange Na est de 95,3% ; Si/Al = 1,0)

Le temps de percée en CO₂ qui s'établit au bout de plusieurs cycles est de 5,9h.

### Exemple 5 (comparatif)

Contrairement à l'exemple 2, le gaz à traiter n'est plus humide. Il a la composition suivante :
- H₂ = 80% en volume
- CO = 20% en volume
- CO₂ = 76 vpm

La zéolite testée est la même zéolite NaX agglomérée que celle de l'exemple 1.

Le temps de percée en CO₂ qui s'établit au bout de plusieurs cycles est de 7,9h.

### Exemple 6 (comparatif)

Le gaz à traiter a la même composition que celui de l'exemple 5.

La zéolite testée est la même zéolite 4 A agglomérée que celle de l'exemple 3.

Le temps de percée en CO₂ qui s'établit au bout de plusieurs cycles est de 3,6h.

### Exemple 7 (selon l'invention)

Le gaz à traiter a la même composition que celui de l'exemple 5.

La zéolite testée est la même zéolite NaLSX agglomérée que celle de l'exemple 4.

Le temps de percée en CO₂ qui s'établit au bout de plusieurs cycles est de 10,8h.

On constate, au travers de ces 6 derniers exemples, que la zéolite NaLSX permet des temps de cycles beaucoup plus longs que les zéolites 4A et NaX, classiquement utilisées dans ce genre de procédé, que ce soit sur un gaz humide (exemples 2 à 4) ou sur un gaz sec (exemples 5 à 7) ; cette dernière illustration correspond à un procédé où la zéolite serait utilisée en deuxième couche après une première couche d'adsorbant ayant servi à éliminer l'eau.

Pour une installation existante, une zéolite type NaLSX permettrait donc des régénérations moins fréquentes, donc une économie d'énergie substantielle. Pour la conception d'une nouvelle installation, elle devrait permettre un dimensionnement de colonnes et des quantités d'adsorbants plus réduits.

## Revendications

1. Procédé de purification de gaz de synthèse à base d'hydrogène et de monoxyde de carbone et/ou d'azote pollué par du dixoyde de carbone et une ou plusieurs éventuelles autres impuretés, comprenant un ou plusieurs cycles comprenant les étapes successives suivantes :
a) faire passer le mélange gazeux à purifier dans une zone d'adsorption comprenant :
- un adsorbant susceptible d'adsorber sélectivement le dioxyde de carbone, qui comprend au moins une zéolite X du type faujasite de rapport Si/Al voisin de 1, de préférence allant de 0,9 et 1,1, et avantageusement allant de 1 à 1,05, dont au moins 70% et de préférence au moins 90 % des sites échangeables sont occupés par des ions sodium ; le reste des sites cationiques étant occupés par des cations de type K, Ca, ou par d'autres cations mono- et/ou polyvalents (magnésium, strontium, baryum, lanthanides ou terres-rares, etc.,
- un ou plusieurs adsorbants susceptibles d'adsorber sélectivement chacune des impuretés, telles que l'eau, les hydrocarbures et/ou les NOx, les adsorbants étant soit mélangés intimement soit sous forme de lits distincts en couches successives,
b) désorber le dioxyde de carbone et la ou les autres impuretés adsorbés sur le ou les adsorbants décrits sous a) par instauration d'une augmentation de température et/ou d'une diminution de pression, cette étape pouvant être complétée par une phase de purge consistant à recycler une partie du gaz purifié ;
c) remonter en pression ladite zone d'adsorption par introduction d'un courant de gaz purifié par la sortie de la zone d'adsorption et/ou refroidir la zone d'adsorption par balayage de gaz froid purifié.

2. Procédé selon la revendication 1 de purification de gaz de synthèse contenant de l'eau et/ou des hydrocarbures lourds à titre d'impuretés en sus du CO₂, **caractérisé en ce que** le ou les adsorbants susceptibles d'adsorber l'eau et/ou les hydrocarbures lourds, de préférence choisis parmi l'alumine, le gel de silice, ou les zéolite de type A ou X, sont soit mélangés intimement avec l'adsorbant susceptible d'adsorber sélectivement le CO₂ soit de préférence sous forme de lits distincts, le ou les lits d'adsorbant(s) susceptibles d'adsorber sélectivement l'eau et/ou les hydrocarbures lourds étant placés en amont du lit d'adsorbant susceptible d'adsorber sélectivement le CO₂

3. Procédé selon la revendication 1 ou 2 de purification de gaz de synthèse contenant un ou plusieurs hydrocarbures légers et/ou des NOx à titre d'impuretés en sus du CO₂ et éventuellement en sus de l'eau et/ou des hydrocarbures lourds, **caractérisé en ce que** le ou les adsorbants susceptibles d'adsorber les hydrocarbures légers et/ou les NOx , de préférence choisis parmi l'alumine, le gel de silice, ou les zéolite de type A ou X, sont soit mélangés intimement avec l'adsorbant susceptible d'adsorber sélectivement le CO₂ et éventuellement le ou les adsorbants susceptibles d'adsorber l'eau et/ou les hydrocarbures lourds, soit de préférence sous forme de lits distincts, le ou les lits d'adsorbant(s) susceptibles d'adsorber sélectivement les hydrocarbures légers et/ou les NOx étant placés en aval du lit d'adsorbant susceptible d'adsorber sélectivement le CO₂.

4. Procédé selon l'une quelconque des revendications 1 à 3 de purification de gaz de synthèse contenant du mercure à titre d'impureté en sus du CO₂ et éventuellement en sus de l'eau et/ou des hydrocarbures lourds, des hydrocarbures légers et/ou des NOx, **caractérisé en ce** la zone d'adsorption comprend un lit à base de zéolite échangée à l'argent.

5. Procédé selon l'une quelconque des revendications 1 à 3 de purification de gaz de synthèse contenant du mercure à titre d'impureté en sus du CO₂ et éventuellement en sus de l'eau et/ou des hydrocarbures lourds, des hydrocarbures légers et/ou des NOx **caractérisé en ce qu'**il comprend une étape supplémentaire consistant à faire passer le flux gazeux à démercuriser en amont ou en aval du procédé décrit dans l'une quelconque des revendications 1 à 4 sur des charbons actifs imprégnés à l'iode ou au soufre.

6. Procédé de purification de gaz de synthèse selon l'une quelconque des revendications 1 à 5, **caractérisé en ce que** la zéolite de type NaLSX se présente sous forme agglomérée avec un liant d'agglomération, de préférence zéolitisé, qui peut représenter de 5 à 30 parties en poids du poids total de l'aggloméré, lesdits agglomérés ayant un diamètre moyen allant de préférence d'environ 0,2 à environ 5 mm.

7. Procédé de purification de gaz de synthèse selon l'une quelconque des revendications 1 à 6, **caractérisé en ce que** la pression du mélange gazeux à purifier lors des étapes d'adsorption a) est supérieure ou égale à 0,5 MPa, de préférence supérieure ou égale à 2 MPa et inférieure ou égale à 7 MPa, avantageusement inférieure ou égale à 5 MPa, et encore plus avantageusement inférieure ou égale à 3 MPa.

8. Procédé de purification de gaz de synthèse selon l'une quelconque des revendications 1 à 7, **caractérisé en ce que** la température du flux gazeux entrant dans la zone d'adsorption est comprise entre 0 et 80°C, préférablement entre 20 et 50°C et **en ce que** la température de désorption est comprise entre 100 et 300°C, préférentiellement entre 150 et 250°C.

9. Procédé de purification de gaz de synthèse selon l'une quelconque des revendications 1 à 8, **caractérisé en ce que** la concentration en CO₂ du mélange gazeux à purifier est inférieure ou égale à 1.000 ppm, de préférence inférieure ou égale à 100 ppm, pour des pressions d'adsorption de l'ordre de 3 MPa et **en ce que** la pression partielle de CO₂ est inférieure ou égale à 3 Pa et préférentiellement inférieure ou égale à 0,3 Pa.

10. Procédé de purification de gaz de synthèse selon l'une quelconque des revendications 1 à 9, **caractérisé en ce qu'**il est de type PSA, VSA et/ou TSA.

## Claims

1. Process for purifying syngas based on hydrogen and carbon monoxide and/or nitrogen, contaminated with carbon dioxide and one or more possible other impurities, comprising one or more cycles comprising the following successive steps:
a) making the gas mixture to be purified pass through an adsorption zone comprising:
- an adsorbent capable of selectively adsorbing carbon dioxide, which comprises at least one X zeolite of the faujasite type with an Si/Al of about 1, preferably ranging from 0.9 to 1.1 and advantageously ranging from 1 to 1.05, at least 70%, and preferably at least 90%, of the exchangeable sites of which are occupied by sodium ions, the rest of the cationic sites being occupied by K- or Ca-type cations or by other monovalent and/or polyvalent cations (magnesium, strontium, barium, lanthanides or rare earths, etc.),
- one or more adsorbents, capable of selectively adsorbing each of the impurities, such as water, hydrocarbons and/or NOx, the adsorbents being either intimately mixed or in the form of separate beds in successive layers;
b) desorbing the carbon dioxide and the other impurity or impurities adsorbed on the adsorbent or adsorbents described in a) by increasing the temperature and/or reducing the pressure, it being possible for this step to be supplemented with a purging phase consisting in recycling some of the purified gas; and
c) increasing the pressure in the said adsorption zone by introducing a flow of purified gas via the outlet of the adsorption zone and/or cooling the adsorption zone by flushing with purified cold gas.

2. Process according to Claim 1 for purifying a syngas containing water and/or heavy hydrocarbons as impurities in addition to CO₂, **characterized in that** the adsorbent or adsorbents capable of adsorbing water and/or the heavy hydrocarbons, preferably chosen from among alumina, silica gel or A-type or X-type zeolites, are either intimately mixed with the adsorbent capable of selectively adsorbing CO₂ or preferably are in the form of separate beds, the bed or beds of adsorbent(s) capable of selectively adsorbing water and/or the heavy hydrocarbons being placed upstream of the bed of adsorbent capable of selectively adsorbing CO₂

3. Process according to Claim 1 or 2 for purifying a syngas containing one or more light hydrocarbons and/or NOx as impurities in addition to CO₂ and possibly in addition to water and/or heavy hydrocarbons, **characterized in that** the adsorbent or adsorbents capable of adsorbing the light hydrocarbons and/or the NOx, preferably chosen from alumina, silica gel or A-type or X-type zeolites, are either intimately mixed with the adsorbent capable of selectively adsorbing the CO₂ and possibly the adsorbent or adsorbents capable of adsorbing the water and/or heavy hydrocarbons, or preferably in the form of separate beds, the bed or beds of adsorbent(s) capable of selectively adsorbing the light hydrocarbons and/or the NOx being placed downstream of the bed of adsorbent capable of selectively adsorbing the CO₂.

4. Process according to any one of Claims 1 to 3 for purifying a syngas containing mercury as impurity in addition to CO₂ and possibly in addition to water and/or heavy hydrocarbons, light hydrocarbons and/or NOx, **characterized in that** the adsorption zone comprises a bed based on a silver-exchange zeolite.

5. Process according to any one of Claims 1 to 3 for purifying a syngas containing mercury as impurity in addition to CO₂ and possibly in addition to water and/or heavy hydrocarbons, light hydrocarbons and/or NOx, **characterized in that** it comprises an additional step consisting in making a gas stream from which mercury has to be stripped pass, upstream or downstream of the process described in any one of Claims 1 to 4, over active carbons impregnated with iodine or with sulphur.

6. Syngas purification process according to any one of Claims 1 to 5, **characterized in that** the NaLSX-type zeolite is present in agglomerated form with an agglomerating binder, the latter preferably being converted into a zeolite, which may represent from 5 to 30 parts by weight of the total weight of the agglomerate, the said agglomerates preferably having a mean diameter ranging from about 0.2 to about 5 mm.

7. Syngas purification process according to any one of Claims 1 to 6, **characterized in that** the pressure of the gas mixture to be purified during the adsorption steps a) is greater than or equal to 0.5 MPa, preferably greater than or equal to 2 MPa, and is less than or equal to 7 MPa, preferably less than or equal to 5 MPa and advantageously less than or equal to 3 MPa.

8. Syngas purification process according to any one of Claims 1 to 7, **characterized in that** the temperature of the gas stream entering the adsorption zone is between 0 and 80°C, preferably between 20 and 50°C, and **in that** the desorption temperature is between 100 and 300°C, preferably between 150 and 250°C.

9. Syngas purification process according to any one of Claims 1 to 8, **characterized in that** the CO₂ concentration of the gas mixture to be purified is less than or equal to 1,000 ppm, preferably less than or equal to 100 ppm, for adsorption pressures of around 3 MPa, and **in that** the CO₂ partial pressure is less than or equal to 3 Pa and preferably less than or equal to 0.3 Pa.

10. Syngas purification process according to any one of Claims 1 to 9, **characterized in that** it is of the PSA, VSA and/or TSA type.

## Patentansprüche

1. Verfahren zur Reinigung von Synthesegas auf Basis von Wasserstoff und Kohlenmonoxid und/oder Stickstoff, das mit Kohlendioxid und einer oder mehreren anderen möglichen Verunreinigungen verunreinigt ist, das einen oder mehrere Zyklen umfasst, die die folgenden aufeinander folgenden Schritte umfassen:
a) Leiten des zu reinigenden Gasgemischs in einen Adsorptionsbereich, der Folgendes aufweist:
- ein Adsorptionsmittel, das gezielt Kohlendioxid adsorbieren kann und mindestens einen Zeolithen X vom Typ Faujasit mit einem Verhältnis Si/Al um 1, vorzugsweise zwischen 0,9 und 1,1, und vorteilhafterweise zwischen 1 und 1,05 aufweist, wobei mindestens 70% und vorzugsweise mindestens 90% der austauschbaren Plätze von Natriumionen besetzt sind und der Rest der Kationenplätze von den Kationen K, Ca oder anderen ein- und/oder mehrwertigen Kationen (Magnesium, Strontium, Barium, Lanthanide oder Seltenerden usw.) besetzt sind,
- ein oder mehrere Adsorptionsmittel, die gezielt jede der Verunreinigungen wie Wasser, Kohlenwasserstoffe und/oder NOx adsorbieren können, wobei die Adsorptionsmittel entweder innig vermischt sind oder als verschiedene Betten in aufeinander folgenden Schichten vorliegen,
b) Desorbieren von Kohlendioxid und der oder den anderen Verunreinigungen, die sich an dem oder den Adsorptionsmitteln angelagert haben, die unter a) beschrieben sind, durch Temperaturerhöhung und/oder Druckverminderung, wobei dieser Schritt durch eine Entleerungsphase ergänzt werden kann, die in der Rückführung eines Teils des gereinigten Gases besteht;
c) Erhöhen des Drucks im Adsorptionsbereich durch Einleitung eines Stroms aus gereinigtem Gas über die Auslassöffnung des Adsorptionsbereichs und/oder Abkühlen des Adsorptionsbereichs durch Spülen mit gereinigtem kaltem Gas.

2. Verfahren nach Anspruch 1 zur Reinigung von Synthesegas, das zusätzlich zum CO₂ als Verunreinigungen Wasser und/oder schwere Kohlenwasserstoffe enthält, **dadurch gekennzeichnet, dass** das oder die Adsorptionsmittel, die Wasser und/oder schwere Kohlenwasserstoffe adsorbieren können und vorzugsweise unter Aluminiumoxid, Kieselsäuregel oder Zeolith A oder X ausgewählt sind, entweder innig mit dem Adsorptionsmittel vermischt sind, das gezielt CO₂ adsorbieren kann, oder vorzugsweise als verschiedene Betten vorliegen, wobei das oder die Adsorptionsmittelbetten, die gezielt Wasser und/oder schwere Kohlenwasserstoffe adsorbieren können, vor dem Adsorptionsmittelbett angeordnet sind, das gezielt CO₂ adsorbieren kann.

3. Verfahren nach Anspruch 1 oder 2 zur Reinigung von Synthesegas, das zusätzlich zum CO₂ und gegebenenfalls zusätzlich zum Wasser und/oder schweren Kohlenwasserstoffen als Verunreinigungen einen oder mehrere leichte Kohlenwasserstoffe und/oder NOx enthält, **dadurch gekennzeichnet, dass** das oder die Adsorptionsmittel, die leichte Kohlenwasserstoffe und/oder NOx adsorbieren können und vorzugsweise unter Aluminiumoxid, Kieselsäuregel oder Zeolith A oder X ausgewählt sind, entweder innig mit dem Adsorptionsmittel vermischt sind, das gezielt CO₂ adsorbieren kann, und gegebenenfalls mit dem oder den Adsorptionsmitteln, die Wasser und/oder schwere Kohlenwasserstoffe adsorbieren können, oder vorzugsweise als verschiedene Betten vorliegen, wobei das oder die Adsorptionsmittelbetten, die gezielt leichte Kohlenwasserstoffe und/oder NOx adsorbieren können, hinter dem Adsorptionsmittelbett angeordnet sind, das gezielt CO₂ adsorbieren kann.

4. Verfahren nach einem der Ansprüche 1 bis 3 zur Reinigung von Synthesegas, das zusätzlich zum CO₂ und gegebenenfalls zusätzlich zum Wasser und/oder schweren Kohlenwasserstoffen, leichten Kohlenwasserstoffen und/oder NOx als Verunreinigung Quecksilber enthält, **dadurch gekennzeichnet, dass** der Adsorptionsbereich ein Bett auf Basis eines mit Silber ausgetauschten Zeolithen aufweist.

5. Verfahren nach einem der Ansprüche 1 bis 3 zur Reinigung von Synthesegas, das zusätzlich zum CO₂ und gegebenenfalls zusätzlich zum Wasser und/oder schweren Kohlenwasserstoffen, leichten Kohlenwasserstoffen und/oder NOx als Verunreinigung Quecksilber enthält, **dadurch gekennzeichnet, dass** es einen zusätzlichen Schritt umfasst, der darin besteht, den Gasstrom, aus dem das Quecksilber entfernt werden soll, vor oder nach dem Vorgang, der in einem der Ansprüchen 1 bis 4 beschrieben ist, über Aktivkohlen zu leiten, die mit Iod oder Schwefel imprägniert sind.

6. Verfahren zur Reinigung von Synthesegas nach einem der Ansprüche 1 bis 5, **dadurch gekennzeichnet, dass** der NaLSX-Zeolith als Agglomerat mit einem Bindemittel für die Agglomeration vorliegt, das vorzugsweise in einen Zeolithen umgewandelt wurde und 5 bis 30 Gewichtsteile des Gesamtgewichts des Agglomerats ausmachen kann, wobei die Agglomerate einen mittleren Durchmesser von vorzugsweise ungefähr 0,2 bis ungefähr 5 mm aufweisen.

7. Verfahren zur Reinigung von Synthesegas nach einem der Ansprüche 1 bis 6, **dadurch gekennzeichnet, dass** der Druck des zu reinigenden Gasgemischs während der Adsorptionsschritte a) größer oder gleich 0,5 MPa ist, vorzugsweise größer oder gleich 2 MPa und unter oder gleich 7 MPa ist, vorzugsweise unter oder gleich 5 MPa, und noch bevorzugter unter oder gleich 3 MPa.

8. Verfahren zur Reinigung von Synthesegas nach einem der Ansprüche 1 bis 7, **dadurch gekennzeichnet, dass** die Temperatur des Gasstroms, der in den Adsorptionsbereich gelangt, zwischen 0 und 80 °C und vorzugsweise zwischen 20 und 50 °C beträgt und **dadurch**, dass die Desorptionstemperatur zwischen 100 und 300 °C und vorzugsweise zwischen 150 und 250 °C beträgt.

9. Verfahren zur Reinigung von Synthesegas nach einem der Ansprüche 1 bis 8, **dadurch gekennzeichnet, dass** die Konzentration an CO₂ im zu reinigenden Gasgemisch bei einem Adsorptionsdruck in der Größenordnung von 3 MPa weniger als oder gleich 1.000 ppm und vorzugsweise weniger als oder gleich 100 ppm beträgt, und **dadurch**, dass der Partialdruck von CO₂ weniger als oder gleich 3 Pa und vorzugsweise weniger als oder gleich 0,3 Pa beträgt.

10. Verfahren zur Reinigung von Synthesegas nach einem der Ansprüche 1 bis 9, **dadurch gekennzeichnet, dass** es sich um ein PSA-, VSA- und/oder TSA-Verfahren handelt.
